# EUROPEAN PATENT SPECIFICATION

(11) **EP 1 780 573 B1**
(45) Date of publication and mention of the grant of the patent: **03.03.2010**
(21) Application number: 07002638.0
(22) Date of filing: 18.01.2006
(51) Int. Cl.: G02B 21/00

(54) **Examination-assisting tool for microscopes**
Untersuchungshilfsmittel für Mikroskope
Outil d'aide à l'examen pour microscopes

(30) Priority: 21.01.2005 JP 2005014625
(43) Date of publication of application: 02.05.2007
(62) Divisional of application: 06001015.4
(73) Proprietor: Olympus Corporation, Shibuya-ku, Tokyo (JP)
(72) Inventor: Nagasawa Nobuyuki, Hino-shi Tokyo 191-0065 (JP); Tanikawa, Yoshihisa, Tokyo 103-0013 (JP)
(74) Representative: von Hellfeld, Axel

(56) References cited:
- WO-A-02/065069
- US-A1- 4 609 814
- US-A1- 2001 039 421
- US-A1- 2002 095 081
- US-A1- 2004 197 017

## Description

### BACKGROUND OF THE INVENTION

### 1. FIELD OF THE INVENTION

The present invention relates to an examination-assisting tool for carrying out in-vivo examination of a specimen such as a living organism.

This application is based on Japanese Patent Application No. 2005-14625.

### 2. DESCRIPTION OF RELATED ART

Recently, visualization of ion concentration, membrane potential, and so on with fluorescence probes has been carried out using optical microscopes. For example, examination of the biological function of nerve cells etc., particularly the examination of dynamic behavior, is often carried out.

A known apparatus for examining such dynamic behavior in the related art is a photomicrograph apparatus (for example, see Japanese Unexamined Patent Application Publication No. 2000-275539).

Such a conventional photomicrograph apparatus takes pictures according to the dynamic motion of the living organism serving as a specimen. Since it selectively takes pictures in stationary, in-focus states during the dynamic motion of the specimen while keeping the focal length of a camera constant, there is a problem in that the acquired images are choppy, and in particular, it is not possible to examine the condition of the specimen in the moving state.

Furthermore, when actually examining the moving state of a specimen in-vivo, since the specimen moves three-dimensionally due to pulsation such as respiratory action, a heartbeat, and so on, image blurring occurs, which is a problem. Image blurring occurs particularly when the specimen moves in a direction intersecting the optical axis of the camera. However, moving the optical axis of the examination optical system including the camera in real time to match the motion of the specimen makes the apparatus more complex, and in particular, performing magnified examination of the specimen with the microscope apparatus becomes impractical. United States Patent Application Publication No. US 2004/0197017 A1 describes the use of virtual reference subjects in a microscopic examination. United States Patent Application Publication No. US 2002/0095081 A1 and United States Patent No. 4,609,814, on the other hand, concern marker devices for use in surgical procedures. International Patent Application Publication No. WO 02/065069 A2 describes a hyperspectral imaging calibration device.

United States Patent No. 6,434,416 B1 discloses mark members stuck to a patient for determining a reference coordinate system for reconstructing CT or MRT images obtained beforehand. The images are displayed on a monitor.

### BRIEF SUMMARY OF THE INVENTION

The present invention has been conceived in light of the circumstances described above, and an object thereof is to provide an examination-assisting tool that enable clear, low-blur examination images to be acquired without moving an examination optical system in real time to match the motion of a specimen.

In order to realize the above-described object, the present invention provides an examination-assisting tool as defined in claim 1. Preferred features of the invention are recited in the dependent claims.

Thus, the invention provides an examination-assisting tool comprising an indicator portion having external dimensions that are contained within an examination region of a microscope and that is visible from outside; and a fixing portion for fixing the indicator portion to a specimen disposed within the examination region.

The fixing portion is integrally fixed to the indicator portion and is formed of a sheet-like transparent member having an area larger than the indicator portion.

By adhering the transparent member to the specimen, the contact area can be increased compared to a case in which the indictor portion is contacted with the specimen, and the friction and contact force with the specimen surface can be increased, which allows the indicator portion to be remain fixed to the specimen surface more reliably. By forming a sheet-like transparent member, the indicator portion can be made more lightweight and can be disposed so as not to cover the specimen.

Furthermore, the indicator portion has a three-dimensional shape.

By doing so, it is possible to use the side faces of the indicator portion to detect tilting of the specimen surface with respect to the optical axis.

Also, by measuring changes in the area and shape of the upper surface, it is possible to determine the direction of motion of the specimen surface.

According to an aspect of the present invention described above, when the examination-assisting tool is sprinkled on the surface of the specimen, the indicator portion, which is visible from outside, is fixed to the surface of the specimen by the fixing portion of the examination-assisting tool. Accordingly, when the specimen moves, along with this motion, the indicator portion also moves within the examination region of the microscope, and thus, it is possible to easily determine the displacement direction of the specimen by tracking the displacement direction of the indicator portion. Therefore, by detecting in advance the displacement direction of the specimen using the trajectory of the indicator portion, the optical axis can be positioned in a direction such that the specimen does not shift relative to the optical axis of the examination optical system, and it is thus possible to track the displacement of the specimen in real time to obtain examination images with reduced blur.

In another aspect of the present invention described above, the indicator portion preferably has a rotationally asymmetric shape.

Using a rotationally asymmetric shape allows the rotation position of the specimen to also be easily detected.

Furthermore, according to another aspect of the present invention described above, the fixing portion may include a contact surface for contacting a surface of the specimen.

By achieving contact using the water component of the specimen surface, a chemical reaction between the specimen surface and the contact surface, and so forth, it is possible to fix the indicator portion to the specimen more securely. Therefore, even if the specimen moves violently, the indicator portion can be prevented from shifting, and it is thus possible to more accurately indicate the movement of the specimen using the indicator portion.

Furthermore, in another aspect of the present invention described above, a plurality of the indicator portions may be disposed in the examination region.

By monitoring the relative positional relationship between the plurality of indicator portions, it is possible to easily determine the displacement direction of the specimen. In this case, each indicator portion may have a rotationally symmetric shape.

According to the aspects of the present invention described above, by simply and reliably indicating the displacement of the specimen surface to enable easy detection thereof, the optical axis is positioned so that the displacement of the specimen in a direction intersecting the optical axis of the examination optical system is minimized, the examination optical system is tracked so that the displacement of the specimen in a direction intersecting the optical axis of the examination optical system is minimized, and when subjecting the acquired images to image processing, the indicator portion is made to stand out, thus enabling blurring to be corrected. As a result, an advantage is afforded in that it is possible to acquire easily viewable examination images with reduced blur.

### BRIEF DESCRIPTION OF THE SEVERAL VIEWS OF THE DRAWINGS

Fig. 1 is a perspective view depicting an examination-assisting tool according to an example not being part of the invention.

Fig. 2 is a longitudinal sectional view showing the examination-assisting tool in Fig. 1.

Fig. 3 is a front view showing an example of an examination apparatus implementing an examination method using the examination-assisting tool in Fig. 1.

Fig. 4 is a side view of the examination apparatus in Fig. 3.

Fig. 5 is a diagram for explaining an orientation adjusting procedure of a measurement head of the examination apparatus in Fig. 3, showing extracted examination-assisting tools in an image.

Fig. 6 is a diagram for explaining the orientation adjusting procedure of the measurement head of the examination apparatus in Fig. 3, showing the displacement of the examination-assisting tools between two images.

Fig. 7 shows a motion trajectory, before orientation adjustment, connecting the centers of the corresponding examination-assisting tools in Fig. 6.

Fig. 8 shows the motion trajectory after orientation adjustment.

Fig. 9 is a diagram for explaining a case where the rotational position of a living organism is detected using an examination-assisting tool.

Fig. 10 is a diagram for explaining a case where the rotational position of a living organism is detected using a spherical examination-assisting tool.

Fig. 11 is a perspective view showing an embodiment of the examination-assisting tool.

Fig. 12 is a front view showing an examination apparatus according to the embodiment of the present invention.

Fig. 13 is a block diagram depicting an image processing unit in the examination apparatus in Fig. 7.

### DETAILED DESCRIPTION OF THE INVENTION

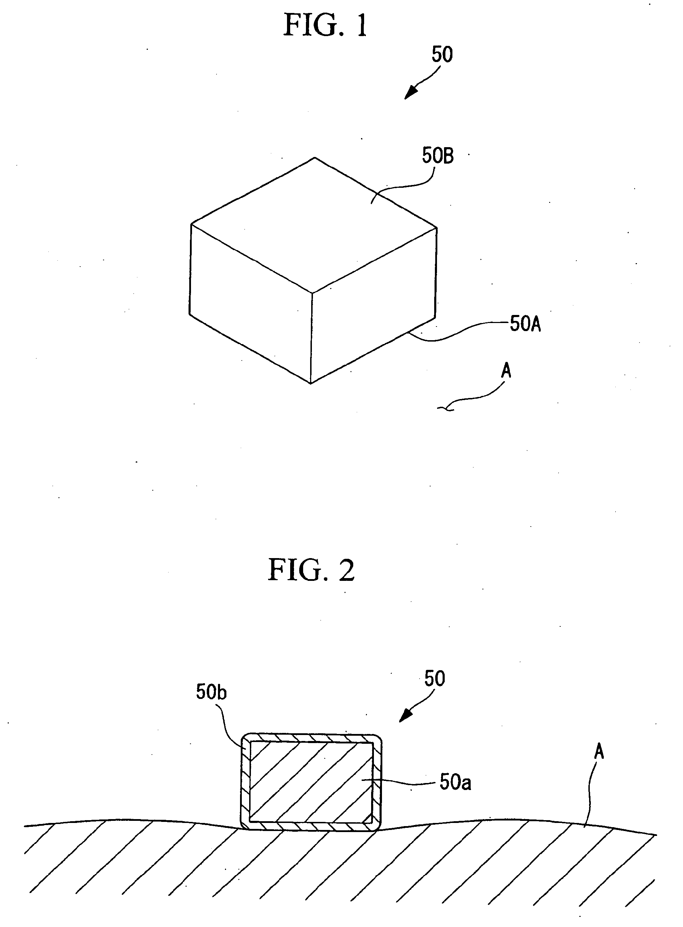

An examination method will be described below with reference to Figs. 1 to 8.

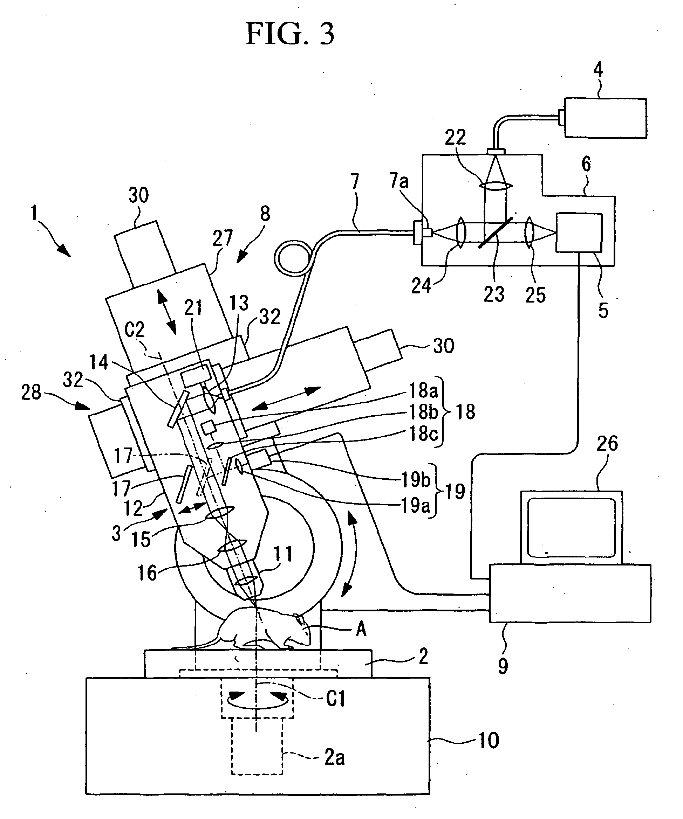

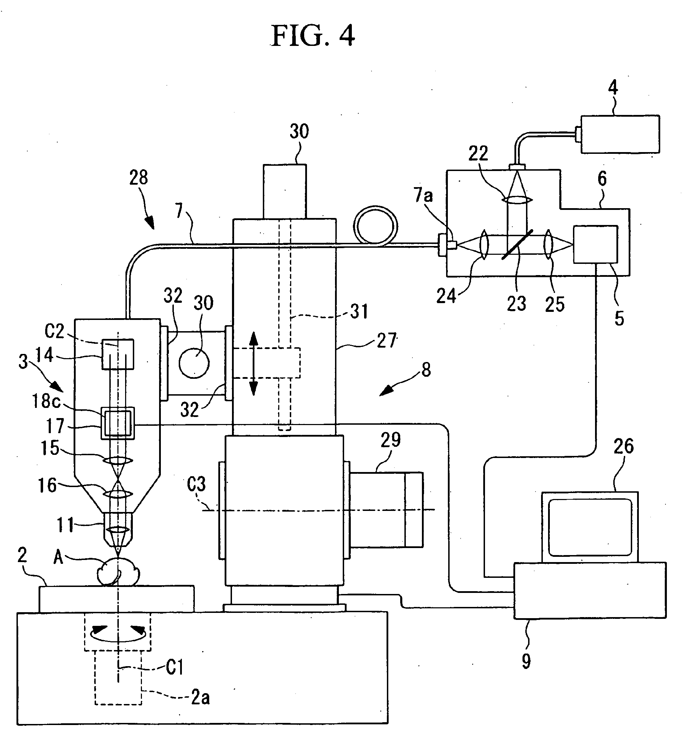

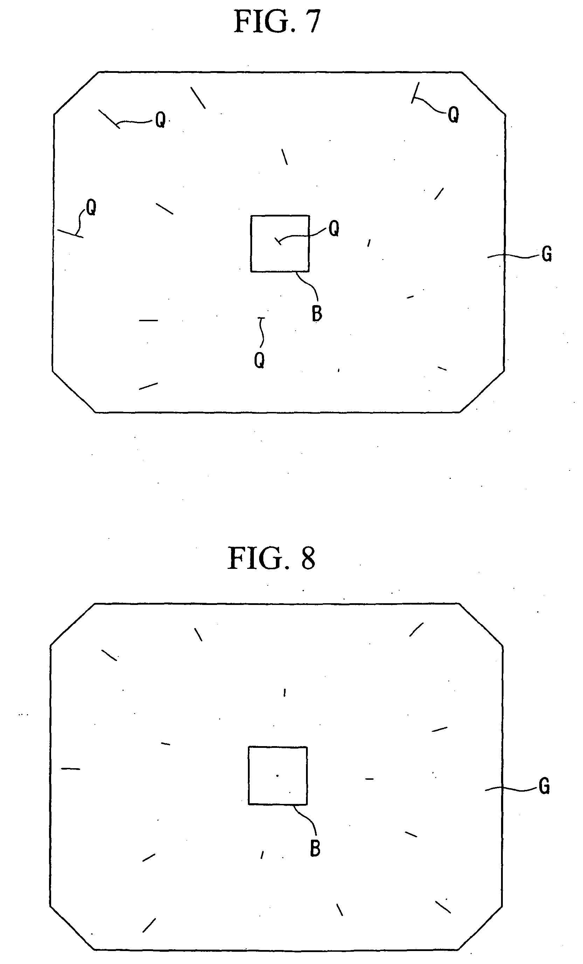

In the examination method, an examination-assisting tool 50 with a rectangular shape having predetermined outer dimensions, as shown in Figs. 1 and 2, is fixed to the tissue surface of a living organism A, serving as an object under examination, a plurality of images are acquired by taking images of an examination region of the tissue surface, including the examination-assisting tool 50, at predetermined time intervals, the acquired plurality of images are processed, a motion trajectory Q of the examination-assisting tool 50 is calculated (see Fig. 7), and an optical axis C2 of a measurement head is fixed at a position where the motion trajectory Q at the examination site of the living organism A is shortest (see Figs. 3 and 4).

The examination-assisting tool 50 is made of metal, resin, or the like, and includes a main body 50a having a color that is clearly visible from the outside, for example, a primary color or a fluorescent color. Also, the examination-assisting tool 50 has a shape that is sufficiently small relative to the examination region such that, even when it is fixed to the surface of the living organism A in the examination region, the outer dimensions thereof are small enough not to cover the examination site or obstruct examination.

An absorbent adhesive layer 50b for fixing the examination-assisting tool 50 to the tissue surface by combining with the moisture of the liquid surface at an incised and exposed portion of the living organism A is coated on the entire surface of the main body 50a of the examination-assisting tool 50. By doing so, the contact surface of the examination-assisting tool 50 for contacting the living organism A forms a fixing section 50A, and the other surfaces form an indicator section (indicator member) 50B that serves as an indicator for examination.

As shown in Figs. 3 and 4 for example, an examination apparatus 1 that realizes the examination method includes a stage 2 for mounting the living organism A serving as the object under examination, a measurement head 3 disposed opposite the stage 2, an optical unit 6 having a laser light source 4 and an optical detector 5, an optical fiber 7 for connecting the measurement head 3 and the optical unit 6, an orientation-adjusting mechanism 8 for supporting the measurement head 3 in such a manner that the orientation thereof can be adjusted, and a control unit 9 for controlling the operation of the orientation-adjusting mechanism 8.

The stage 2 includes a stage-rotating mechanism 2a for rotating the stage 2 about a vertical axis C1 relative to a base 10. Fixing the measurement head 3 and operating the stage-rotating mechanism 2a allows observation of the living organism A from different angles around the entire circumference thereof.

As shown in Fig. 3, the measurement head 3 includes an objective optical system 11 that is positioned at the end opposing the stage 2, a collimator optical system 13 disposed inside a housing 12 to which the objective optical system 11 is attached, an optical scanning unit 14, a pupil-projection optical system 15, and an image-forming optical system 16. The collimator optical system 13 converts the laser light guided by the optical fiber 7 into a collimated beam. The optical scanning unit 14, which is depicted only schematically in the figure, can two-dimensionally scan the collimated beam from the collimator optical system 13 by causing two galvanometer mirrors to rock back and forth about the two orthogonal axes thereof.

The pupil projection optical system 15 collects the laser light scanned by the optical scanning unit 14 and forms an intermediate image. The image-forming optical system 16 collects the laser light forming the intermediate image and converts it to a collimated beam.

The objective optical system 11, which is disposed close to the living organism A mounted on the stage 2, collects the collimated beam from the image-forming optical system 16 and re-images it on the surface of the living organism A or at a specified focal position in the internal tissue of the living organism A.

The measurement head 3 also includes a mirror 17 that can be inserted in and removed from the light path of return light returning from the pupil-projection optical system 15 towards the optical scanning unit 14, an illumination optical system 18 that irradiates illumination light along an optical axis C2 of the objective optical system 11 via the mirror 17 when the mirror 17 is inserted in the light path, and an image-acquisition optical system 19 for acquiring the return light from the living organism A after reflection by the mirror 17.

The illumination optical system 18 includes a light source 18a such as an LED, a collimator lens 18b for collimating the light emitted from the light source 18a, and a half-mirror 18c for making the collimated light from the light source 18a incident on the mirror 17. The image-acquisition optical system. 19 includes a focusing lens 19a and a CCD camera 19b.

The measurement head 3 is further provided with an autofocus mechanism 21 for moving the collimator optical system 13 in the optical axis direction thereof to adjust the focal position according to the displacement of the living organism A in the direction of the optical axis C2 of the objective optical system 11.

The optical unit 6 includes a collimator lens 22 for converting the laser light emitted from the laser light source 4 into a collimated beam, a dichroic mirror 23 for reflecting the laser light and for transmitting return light returning to the optical unit 6, a focusing lens 24 for focusing the laser light reflected by the dichroic mirror 23 onto an end face 7a of the optical fiber 7, and a focusing lens 25 for focusing the return light transmitted through the dichroic mirror 23 onto the optical detector 5. The optical detector 5 is, for example, a photomultiplier tube. A monitor 26 is connected to the optical detector 5 via an image processing unit (not shown) in the control unit 9 to display the acquired images on the monitor 26.

The optical fiber 7 is connected to the optical unit 6 and the measurement head 3 and carries the laser light from the optical unit 6 to introduce it into the measurement head 3. In addition, the optical fiber 7 carries the return light returning from the measurement head 3 and introduces it into the optical unit 6.

As shown in Fig. 4, the orientation-adjusting mechanism 8 includes, for example, a rotating arm 27 that can rotate about a horizontal axis C3 and a two-axis motion mechanism 28, which is attached to the end of the rotating arm 27, for moving the measurement head 3 in the longitudinal direction of the rotating arm 27 and in the direction orthogonal thereto.

The rotating arm 27 can be oscillated within a vertical plane by means of a motor 29. The motion mechanism 28 includes, for example, a motor 30, a ball screw 31, and a slider 32 that is supported by a linear guide (not shown in the drawing) and that is moved in a straight line by means of the ball screw 31.

As shown in Fig. 3, the control unit 9 is connected to the CCD camera 19b to acquire at least two images with a predetermined interval therebetween. When an image is initially acquired by the CCD camera 19b, the control unit 9 first extracts the examination-assisting tool 50 from the acquired image. Since the examination-assisting tool 50 has color that is clearly visible from the outside, the examination-assisting tool 50 can be easily extracted based on that color or the luminance thereof.

Next, the control unit 9 calculates the motion trajectory of the examination-assisting tool 50, which indicates how the extracted examination-assisting tool 50 moves between a plurality of the acquired images. If the number of images acquired by the CCD camera 19b is two, for example, those two images are superimposed and the motion trajectory is calculated by joining the centers of the two corresponding examination-assisting tools 50. Then, the orientation-adjusting mechanism 8 is operated to minimize the motion trajectory at the examination site in the images, for example, near the centers of the images.

Since the examination-assisting tool 50 has predetermined outer dimensions in the present embodiment, the displacement of the surface of the living organism A in the optical axis C2 direction of the objective optical system 11 can be detected by processing the plurality of acquired images and comparing the sizes of the extracted examination-assisting tools 50. In order to further facilitate this comparison of the sizes, a scale may be provided on the surface of the examination-assisting tool 50. Also, instead of image processing, a distance sensor (not shown in the drawings) for measuring the actual distance between the surface of the living organism A and the objective optical system 11 may be provided, and the auto-focus system 21 may be operated based on the measured distance.

With the examination apparatus 1 according to the present embodiment, to carry out in-vivo examination of the living organism A, such as a small laboratory animal like a mouse, first, an incision is made in the skin of the living organism A, and a plurality of examination-assisting tools 50 are sprinkled on the exposed tissue surface. Since the examination-assisting tools 50 are coated with the adhesive layer 50b, when one of the surfaces of the examination-assisting tools 50 comes into contact with the tissue surface, the adhesive layer 50b on the contact surface absorbs the moisture in the tissue surface and thus adheres to the tissue surface. By doing so, the examination-assisting tool 50 is fixed relative to the surface of the living organism A and thus moves together with any movement of the living organism A.

In this state, the mirror 17 is inserted between the optical scanning unit 14 and the pupil-projection unit 15 in the measurement head 3, light from the light source 18a is irradiated onto the living organism A via the collimator lens 18b, the half-mirror 18c, the mirror 17, the pupil-projection optical system 15, the image-forming optical system 16, and the objective optical system 11, and return light returning from the living organism A via the objective optical system 11, the image-forming optical system 16, the pupil-projection optical system 15, the mirror 17, and the half-mirror 18c is focused by the focusing lens 19a and an image is acquired by the CCD camera 19b.

Image acquisition is carried out, for example, two times with a certain time interval therebetween. Then, by operating the control unit 9, the corresponding examination-assisting tools 50 in the two images acquired by the CCD camera 19b are extracted and the motion trajectory thereof is calculated.

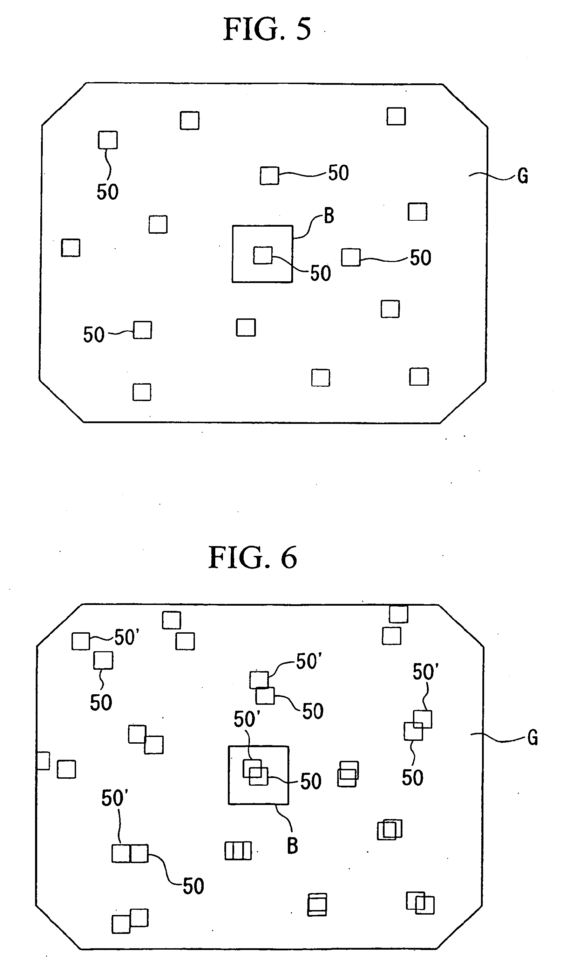

More specifically, as shown in Fig. 5, examination-assisting tools 50 having a predetermined luminance value or greater in two acquired images G are extracted. The images G are shown here for the sake of facilitating the explanation; in the present embodiment, however, such images need not be displayed on the monitor 26 when carrying out the calculation. Reference character B in the figure is the examination site. As shown in Fig. 6, motion trajectories Q can be calculated by superimposing the two images G and connecting the centers of the corresponding examination-assisting tools 50 and 50', as shown in Fig. 7.

In Fig. 7, the motion trajectory Q inside the examination site B is not the shortest motion trajectory in the image G, indicating that the living organism A is moving in a direction intersecting the optical axis C2 of the objective optical system 11 in the examination site B. When carrying out examination in this state, since some blurring occurs in the image of the examination site B, the orientation-adjusting mechanism 8 is operated so that, among the plurality of calculated motion trajectories of the examination-assisting tools 50, the motion trajectory Q at the examination site B is minimized.

In the present embodiment, since the orientation-adjusting mechanism 8 is formed of the rotating arm 27 and the two-axis motion mechanism 28, the angle of the optical axis C2 of the measurement head 3 within a plane parallel to the rotation plane of the rotating arm 27 can be freely adjusted while keeping the focal position of the objective optical system 11 fixed. Also, when it is desired to change the angle of the optical axis C2 of the measurement head 3 in other directions, the stage 2 is rotated about the vertical axis C1 by operating the stage rotating mechanism 2a. By doing so, it is possible to freely adjust the orientation of the optical axis C2 in three dimensions with respect to the living organism A.

Accordingly, the orientation of the optical axis C2 of the measurement head 3 is adjusted so that the examination-assisting tool 50 at the examination site B does not move, as shown in Fig. 8, and the living organism A, which generally shifts in three dimensions, thus shifts only in the direction of the optical axis C2 of the measurement head 3 at the examination site B.

In this state, in the measurement head 3, when the mirror 17 is removed from between the optical scanning unit 14 and the pupil-projection optical system 15 and the optical unit 6 is operated to emit laser light from the laser light source 4, the emitted laser light passes along a path including the collimator lens 22, the dichroic mirror 23, and the focusing lens 24 and is focused onto the end face 7a of the optical fiber 7 to be launched into the optical fiber 7.

The laser light launched into the optical fiber 7 propagates inside the optical fiber 7, enters the measurement head 3, passes through the collimator optical system 13, the optical scanning unit 14, the pupil-projection optical system 15, and the image-forming optical system 16 in the measurement head 3, and is imaged at a specified focal position inside the living organism A. Fluorescence emitted from the internal tissue due to irradiation with the laser light passes through the objective optical system 11, the image-forming optical system 16, the pupil-projection optical system 15, the optical scanning unit 14, and the collimator optical system 13, propagates inside the optical fiber 7, and returns to the optical unit 6 where it is converted into a collimated beam by the focusing lens 24. Thereafter, the light is transmitted through the dichroic mirror 23 and is made incident on the optical detector 5 by the focusing lens 25. The detection signal at the optical detector 5 is transmitted to the control unit 9 where it is subjected to image processing and displayed on the monitor 26 as a fluorescence image.

With the examination apparatus 1 according to the present embodiment, prior to examining the examination site B, the optical axis C2 direction of the measurement head 3 is set relative to the living organism A so that the examination site B shifts only in the direction of the optical axis C2. Therefore, it is possible to keep the optical axis C2 fixed during examination, which allows low-blur fluorescence images to be acquired. Furthermore, by comparing the sizes of the examination-assisting tool 50 using image processing, any shift of the surface of the living organism A in the optical axis C2 direction of the measurement head 3 can be detected, and simply by operating the autofocus mechanism 21 in response thereto, it is possible to keep the examination site B in focus. Therefore, an advantage is afforded in that it is possible to acquire clear fluorescence images. When imaging the interior of a living organism A using the confocal effect, by displacing the detected surface position and the focal position of the objective optical system 11, it is possible to carry out confocal examination while keeping the focal position fixed at a predetermined depth inside the living organism A.

With the examination apparatus 1 according to the present embodiment, even if the examination site B of the living organism A, for example, a mouse, exhibits periodical motion such as respiratory motion, since the optical axis C2 of the measurement head 3 is constrained to be parallel to the three-dimensional displacement of that examination site B prior to examination, it is possible to substantially reduce the amount of blurring of the image G due to the displacement of the living organism A. Thus, by operating the auto-focus mechanism 21 to compensate for the displacement of the examination site B in the optical axis C2 direction, which is obtained by comparing the sizes of the extracted examination-assisting tools 50, it is possible to keep the focal position aligned with the examination site B. As a result, clear, blur-free, in-focus images G can be obtained.

In the embodiment described above, a configuration that allows the light path to the CCD camera 19b and the light path to the optical unit 6 to be switched by inserting and removing the mirror 17 has been described; however, the present invention is not limited thereto. For example, by simultaneously switching to a low-magnification objective optical system when switching to the CCD camera 19b, when aligning the optical axis C2 of the measurement head 3, a comparatively wide area can be imaged to check the motion trajectory Q thereof; then, by switching to the high-magnification objective optical system 11 when carrying out examination using the optical unit 6, the examination site B, which is limited to a narrow area, can be magnified for examination.

In the embodiment described above, a configuration in which the light path to the optical unit 6 and the light path to the CCD camera 19b are switched by inserting and removing the mirror 17 has been given as an example; however, when the specimen moves rapidly, requiring more synchronous processing, the light path to the CCD camera 19b may be provided separately from the light path to the optical unit 6.

In the embodiment described above, the orientation-adjusting mechanism 8, which is formed of the rotating arm 27 and the two-axis motion mechanism 28, and the stage 2, which can rotate about the vertical axis, are employed as a mechanism for changing the orientation of the optical axis C2 of the measurement head 3; instead of this, however, a manipulator having any other axial configuration may be adopted.

Although an example has been described in which the motion trajectory Q is calculated using two acquired images with a certain time interval therebetween, instead of this, the motion trajectory Q may be calculated using three or more images, or even moving images.

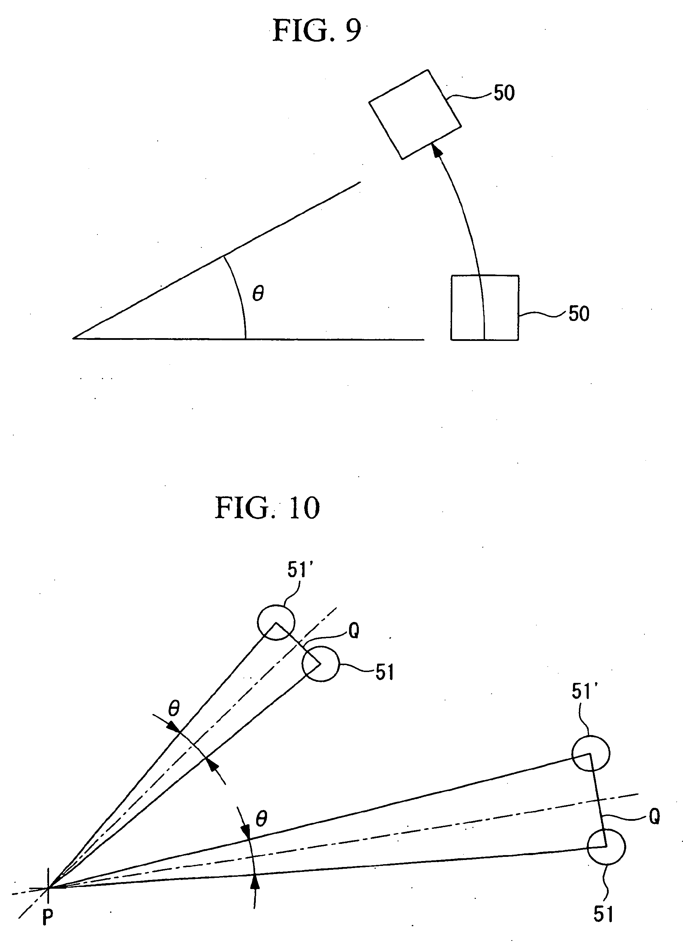

In the embodiment described above, a plurality of examination-assisting tools 50, each formed as a rectangular block, are sprinkled over the tissue surface; instead of this, however, a single examination-assisting tool 50 may be disposed only at the examination site B. Since the examination-assisting tool 50 is formed as a rotationally asymmetric rectangular block, as a result of displacement of the living organism A, even if the examination-assisting tool 50 shifts so as to rotate about the optical axis C2 of the objective optical system 11, as shown in Fig. 9, it is possible to detect the rotation angle θ thereof by image processing and to correct the image G so that the positions of the examination-assisting tool 50 in the image G before and after the displacement are coincident. Also, employing a rectangular-block-shaped examination-assisting tool 50 means that the examination-assisting tool 50 has side faces that rise by a certain distance from the tissue surface of the living organism A. Therefore, when detecting these side surfaces using image processing, it is possible to detect whether the examination-assisting tool 50 is tilted to the displacement of the living organism A.

Instead of the examination-assisting tool 50 having the rotationally asymmetric rectangular-block shape, as shown in Fig. 10, a spherical examination-assisting tool 51 may be used. In such a case, unlike the rotationally asymmetric examination-assisting tool 50, the rotation angle θ of the living organism A cannot be detected by itself; however, by disposing a plurality of examination-assisting tools 51 in the examination area, as shown in Fig. 10, and calculating the vertex angles of an isosceles triangle joining the intersection P of the center lines of two motion trajectories Q and both ends of each motion trajectory Q, it is possible to detect the rotation angle θ of the living organism A. Furthermore, forming the examination-assisting tools 51 as spheres in this way provides an advantage in that they can be easily sprinkled over the tissue surface of the living organism A and they are easier to handle.

In the embodiment described above, the adhesive layer 50b is coated on the surfaces of the main body 50a of the examination-assisting tool 50, which is formed of metal or resin; instead of providing the adhesive layer 50b, however, the examination-assisting tool 50 may be held in contact with the tissue surface by moisture in the tissue surface.

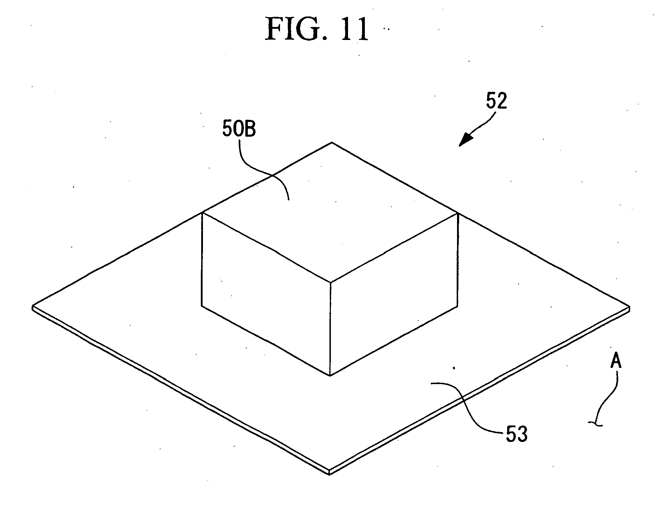

In this case, the contact area with the tissue surface may be increased while ensuring frictional force therebetween. For example, an examination-assisting tool 52 shown in Fig. 11 may be employed; this examination-assisting tool 52 has a sheet-like member 53, with an area larger than the indicating portion 50B, attached to the surface that contacts the tissue surface. In such a case, forming the sheet-like member 53 of a transparent material allows the frictional force between the examination-assisting tool 52 and the tissue surface of the living organism A to be increased without blocking the visibility. It is also possible to fix a plurality of indicating portions 50B to the transparent sheet-like member 53 with gaps therebetween. In such a case, by correctly setting the sizes of the gaps, that is, by setting the gap size to be large or small, it is possible to detect whether the focal position is far away or close in the optical axis C2 direction of the objective optical system 11.

Furthermore, a quantum-dot fluorescent reagent may be used as the examination-assisting tool.

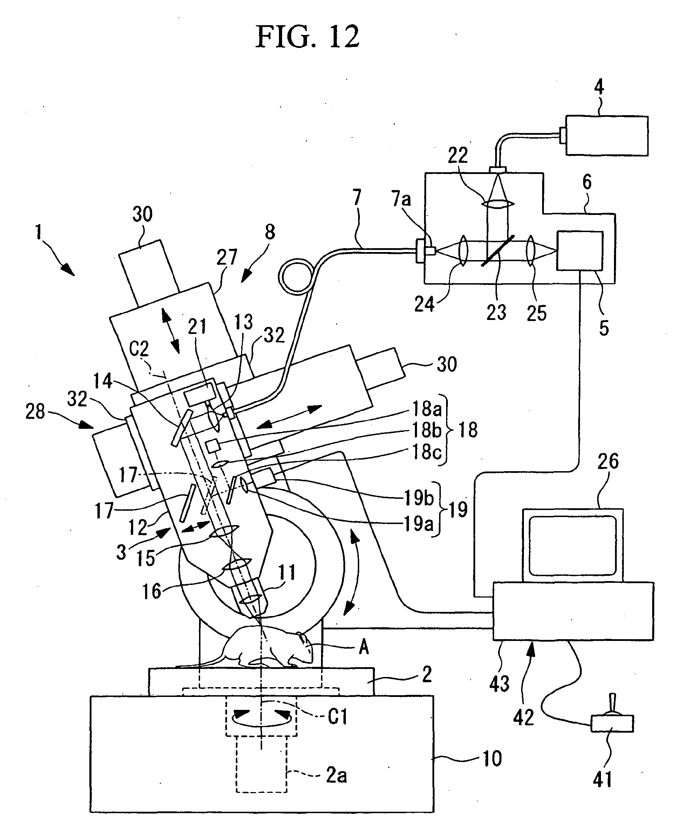

The example above has been described in terms of a case where the control unit 9 for automatically controlling the orientation-adjusting mechanism 8 is provided; instead of this, however, as shown in Fig. 12, a control unit 42 provided with an operating device 41 for manually operating the orientation-adjusting mechanism 8 may be provided. The operating device 41 is formed of any type of input device, such as a mouse, a joystick, or the like.

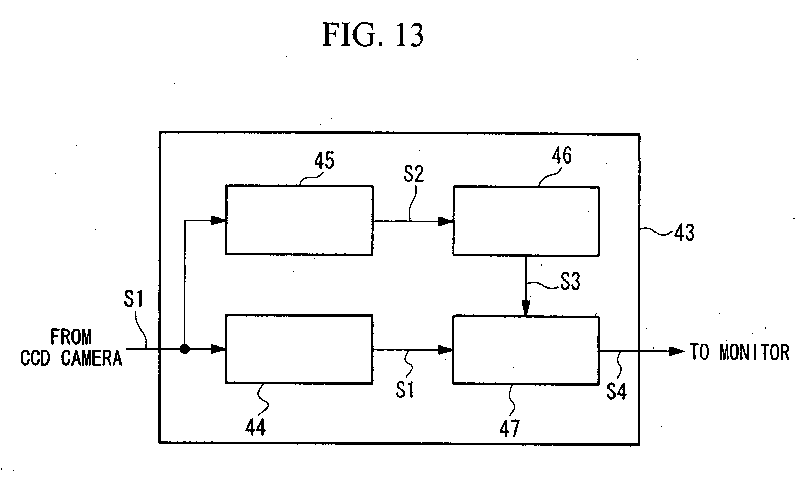

In such a case, the control unit 42 includes an image processing unit 43. As shown in Fig. 13, the image processing unit 43 includes an image storing unit 44 for storing image information S1 about the living organism A, which is obtained by the CCD camera 19b; an examination-assisting-tool extraction unit 45 which processes the obtained image information S1 to extract the plurality of examination-assisting tools 50 and which outputs examination-assisting-tool information S2; a motion-trajectory calculating unit 46 for calculating a motion trajectory Q for each extracted examination-assisting tool 50 and outputting motion-trajectory information S3; and an image combining unit 47 that superimposes the image of the living organism obtained by the CCD camera 19b and the motion trajectory Q of each extracted examination-assisting tool 50. An image signal S4 output from the image combining unit 47 in the image processing unit 43 is transmitted to the monitor 26 for display.

The operating device 41 can move the optical axis C2 of the measurement head 3 in a desired angular direction.

According to this configuration, the individual motion trajectories Q are displayed on the monitor together with the image G acquired by the CCD camera 19b. The operator can thus check changes in the motion trajectories in the image G on the monitor 26 by operating the operating device 41 while viewing the image on the monitor 26. When the motion trajectory Q at the examination site B shown on the image G on the monitor 26 is long, it can be understood that the optical axis C2 of the measurement head 3 is tilted relative to the direction of motion of the surface of the living organism A, and when the motion trajectory Q is short, it can be understood that the optical axis C2 of the measurement head 3 is disposed close to the direction of motion of the surface of the living organism A.

Therefore, the operator can operate the operating device 41 to adjust the orientation of the optical axis C2 of the measurement head 3 so that the motion trajectory Q in the image G on the monitor 26 is shortened.

By doing so, after the optical axis C2 of the measurement head 3 is disposed in a direction parallel to the displacement direction of the living organism A, by switching to examination using the optical unit 6 to carry out examination, it is possible to acquire blur-free fluorescence images.

In the embodiment above, an examination method in which the measurement head is set so that the tissue surface of the living organism A at the examination site moves in a direction aligned with the optical axis C2 of the measurement head 11 for carrying out examination is described; instead of this, however, after fixing the optical axis C2 at a suitable position and carrying out a plurality of image acquisition procedures, image processing for translating or rotating the image may be carried out so that the examination-assisting tools 50 in the plurality of acquired images G are aligned, and examination may be carried out based on the corrected images obtained. Furthermore, if image processing and orientation adjustment of the measurement head can be realized at higher speed, the optical axis C2 of the measurement head 11 may be moved in real time so as to align the examination-assisting tools 50 in each of the acquired images G.

## Claims

1. An examination-assisting tool (50, 51, 52), comprising:
an indicator portion (50B) in the form of a three-dimensional body adapted to be physically applied to a surface of a specimen (A) under examination, the indicator portion (50B) having external dimensions that are configured to be contained within an examination region of a microscope and being visible from outside, and
a fixing portion (50A) for fixing the indicator portion (50B) to the surface of the specimen (A) disposed within the examination region, comprising an adhesive layer coated on a surface of the indicator portion (50B),
**characterized in that** the fixing portion (50A) is integrally fixed to the indicator portion (50B) and is formed of a sheet-like transparent member (53) having an area larger than the indicator portion (50B) and the adhesive layer is an absorbent adhesive layer, which combines with moisture on the surface of the specimen (A).

2. The examination-assisting tool (50, 51, 52) according to Claim 1, wherein the indicator portion (50B) has a rotationally asymmetric shape.

3. The examination-assisting tool (50, 51, 52) according to Claim 1, wherein the fixing portion (50A) includes a contact surface for contacting the surface of the specimen (A).

4. The examination-assisting tool (50, 51, 52) according to Claim 1, wherein a plurality of the indicator portions (50B) are configured to be disposed within the examination region.

5. The examination-assisting tool (50, 51, 52) according to claim 1, wherein the indicator portion (50B) has a fluorescent color.

6. The examination-assisting tool (50, 51, 52) according to claim 1, wherein the adhesive layer is coated on the entire surface of the indicator portion (50B).

## Patentansprüche

1. Untersuchungshilfsmittel (50, 51, 52), umfassend
einen Anzeigeabschnitt (50B) in Form eines dreidimensionalen Körpers, der ausgebildet ist zum physischen Anbringen an der Oberfläche einer zu untersuchenden Probe (A), wobei der Anzeigeabschnitt (50B) äußere Abmessungen aufweist, die so gestaltet sind, dass sie sich innerhalb eines Untersuchungsbereichs eines Mikroskops befinden und von außen sichtbar sind, und
einen Befestigungsabschnitt (50A) zum Befestigen des Anzeigeabschnitts (50B) an der Oberfläche der innerhalb des Untersuchungsbereichs angeordneten Probe (A), mit einer auf einer Oberfläche des Anzeigeabschnitts (50B) aufgebrachten Klebeschicht, **dadurch gekennzeichnet, dass** der Befestigungsabschnitt (50A) in integraler Weise an dem Anzeigeabschnitt (50B) befestigt ist und aus einem folienartigen, transparenten Element (53) besteht, dessen Fläche größer als die des Anzeigeabschnitts (50B) ist, und dass die Klebeschicht eine absorbierende Klebeschicht ist, die sich mit der Feuchtigkeit auf der Oberfläche der Probe (A) verbindet.

2. Untersuchungshilfsmittel (50, 51, 52) nach Anspruch 1, wobei der Anzeigeabschnitt (50B) eine rotations-asymmetrische Form aufweist.

3. Untersuchungshilfsmittel (50, 51, 52) nach Anspruch 1, wobei der Befestigungsabschnitt (50A) eine Kontaktfläche zum Herstellen eines Kontakts mit der Oberfläche der Probe (A) aufweist.

4. Untersuchungshilfsmittel (50, 51, 52) nach Anspruch 1, wobei eine Mehrzahl von Anzeigeabschnitten (50B) zum Anordnen innerhalb des Untersuchungsbereichs ausgebildet ist.

5. Untersuchungshilfsmittel (50, 51, 52) nach Anspruch 1, wobei der Anzeigeabschnitt (50B) eine fluoreszierende Farbe aufweist.

6. Untersuchungshilfsmittel (50, 51, 52) nach Anspruch 1, wobei die Klebeschicht auf der gesamten Fläche des Anzeigeabschnitts (50B) aufgebracht ist.

## Revendications

1. Outil d'aide à l'examen (50, 51, 52), comprenant :
une partie d'indicateur (50B) sous la forme d'un corps tridimensionnel adapté pour être physiquement appliqué à une surface d'un échantillon (A) sous examen, la partie d'indicateur (50B) ayant des dimensions externes qui sont configurées pour être contenues à l'intérieur d'une région d'examen d'un microscope et étant visible de l'extérieur, et
une partie de fixation (50A) pour fixer la partie d'indicateur (50B) à la surface de l'échantillon (A) disposé à l'intérieur de la région d'examen, comprenant une couche adhésive déposée sur une surface de la partie d'indicateur (50B),
**caractérisé en ce que** la partie de fixation (50A) est fixée de façon intégrale à la partie d'indicateur (50B) et est formée d'un élément transparent (53) en feuille ayant une superficie plus grande que la partie d'indicateur (50B) et la couche adhésive est une couche adhésive absorbante, qui se combine avec l'humidité sur la surface de l'échantillon (A).

2. Outil d'aide à l'examen (50, 51, 52) selon la revendication 1, dans lequel la partie d'indicateur (50B) a une forme asymétrique en rotation.

3. Outil d'aide à l'examen (50, 51, 52) selon la revendication 1, dans lequel la partie de fixation (50A) inclut une surface de contact pour un contact avec la surface de l'échantillon (A).

4. Outil d'aide à l'examen (50, 51, 52) selon la revendication 1, dans lequel une pluralité des parties d'indicateur (50B) sont configurées de façon à être disposées à l'intérieur de la région d'examen.

5. Outil d'aide à l'examen (50, 51, 52) selon la revendication 1, dans lequel la partie d'indicateur (50B) a une couleur fluorescente.

6. Outil d'aide à l'examen (50, 51, 52) selon la revendication 1, dans lequel la couche adhésive est déposée sur la totalité de la surface de la partie d'indicateur (50B).
